# EUROPÄISCHE PATENTSCHRIFT

(11) **EP 3 885 787 B1**
(45) Veröffentlichungstag und Bekanntmachung des Hinweises auf die Patenterteilung: **04.05.2022**
(21) Anmeldenummer: 20166102.2
(22) Anmeldetag: 27.03.2020
(51) Int. Cl.: G01S 7/48, G01S 17/42, G01S 17/89, G06K 9/00, G06K 9/62

(54) **ERFASSUNG VON ABSTANDSMESSDATEN**
DETECTION OF DISTANCE MEASUREMENT DATA
ACQUISITION DE DONNÉES DE MESURE DE DISTANCE

(43) Veröffentlichungstag der Anmeldung: 29.09.2021
(73) Patentinhaber: SICK AG, 79183 Waldkirch (DE)
(72) Erfinder: Honal, Matthias, 79299 Wittnau (DE); Engesser, Raphael, 79280 Au (DE); Beck, Fabian, 77955 Ettenheim (DE)

(56) Entgegenhaltungen:
- WO-A1-97/39394
- DIETRICH ROBIN ET AL: "Deep Learning-Based Mutual Detection and Collaborative Localization for Mobile Robot Fleets Using Solely 2D LIDAR Sensors", 2019 IEEE/RSJ INTERNATIONAL CONFERENCE ON INTELLIGENT ROBOTS AND SYSTEMS (IROS), IEEE, 3. November 2019 (2019-11-03), Seiten 6706-6713, XP033695149, DOI: 10.1109/IROS40897.2019.8967574 [gefunden am 2020-01-23]

## Beschreibung

Die Erfindung betrifft einen optoelektronischen Sensor und ein Verfahren zur Erfassung von Abstandsmessdaten von Objekten in einem Überwachungsbereich nach dem Oberbegriff von Anspruch 1 beziehungsweise 14.

Ein weitverbreiteter Sensortyp zur Abstandsmessung ist der Laserscanner. Darin überstreicht ein von einem Laser erzeugter Lichtstrahl mit Hilfe eines Drehspiegels periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

In jüngerer Zeit kommen zu den weit verbreiteten Laserscannern mit Drehspiegel Varianten mit drehbarem Messkopf, in dem Laser und Lichtempfänger mitrotieren, mehrstrahlige Systeme zur Erweiterung des Messbereichs über eine einzelne Abtastebene hinaus und vermehrt auch sogenannte Solid-State-Systeme hinzu, in denen die beweglichen Teile durch Mikrosysteme oder elektronische Ansteuerungen ersetzt sind. Ein gängiger zusammenfassender Begriff derartiger Sensoren zur Erfassung von Abstandsmessdaten ist LiDAR (Light Detection and Ranging).

In vielen Anwendungen ist die Messumgebung eines LiDAR-Sensors gestört. Das betrifft den Einsatz im Außenbereich mit Umwelteinflüssen wie Nebel, Gischt, Staub, Regen oder Schnee, etwa bei der Verkehrsüberwachung, aber auch Anwendungen in staubiger Umgebung des Bergbaus oder von Maschinen, etwa in einem Sägewerk oder der verarbeitenden Industrie. Hier besteht die Herausforderung, die Umwelteinflüsse in den Abstandsmessdaten zu unterdrücken und gleichzeitig weiterhin verlässliche Messwerte der Objekte zu erzeugen.

Ein herkömmlicher Ansatz zur Verbesserung der Messung unter Umwelteinflüssen basiert auf Filtern, die typische Störungen erkennen und eliminieren. Beispiele hierfür sind sogenannte Teilchenfilter, Echofilter oder Nebelfilter. Teilchenfilter erkennen zeitlich und räumlich vereinzelte Messpunkte. Dadurch bleiben größere beziehungsweise statische Objekte erhalten, jedoch werden großflächigere Störungen etwa durch Nebel oder Gischt auch nicht ausgefiltert. In sogenannten mehrechofähigen Laserscannern, die Abstände zu mehreren längs der Sichtlinie hintereinander angeordneten Objekten messen, können Echofilter zum Einsatz kommen. Das wird mit Heuristiken verknüpft, etwa dass im Nebel der erste Peak im Empfangssignal von Nebeltröpfchen und der letzte Peak von dem eigentlichen Zielobjekt dahinter stammt. Das Echofilter ist unempfindlich gegen großflächige Störungen, aber nicht immer passt die Heuristik zum tatsächlichen Zielobjekt, etwa im Falle von Kantentreffen auf die Kante zwischen zwei Objekten. Ein Nebelfilter unterdrückt Messwerte, deren Intensität kleiner oder gleich der typischen Intensität von Nebel am gemessenen Abstand ist. Das Nebelfilter erkennt Störeinflüsse geringer Intensität unabhängig von der Ausdehnung der Störung. Es ist aber schwierig, die jeweilige abstandsabhängige Nebelschwelle unter Berücksichtigung des Energieverlusts des Lichtsignals durch den Nebel korrekt zu setzen, und manche fernen und insbesondere dunkeln Objekte werden fälschlich unterdrückt.

Jedes Filter modelliert immer nur spezielle Teilaspekte von möglichen Umwelteinflüssen. Das eine universelle Filter gibt es nicht, für das Entwerfen und Parametrieren des Filters sowie die Auswahl einer geeigneten Filterkombination unter Abwägen der Vor- und Nachteile in einer speziellen Anwendungssituation bedarf es vertieften Expertenwissens. Trotz dieses Aufwands müssen oft noch erhebliche Kompromisse eingegangen werden.

Als Alternative zur Filterung von Störeinflüssen ist auch denkbar, umgekehrt Modelle der zu detektierenden Objekte zu erstellen, etwa von Fahrzeugen in der Verkehrsklassifikation oder von Baggerschaufeln im Bergbau. Ein solcher Ansatz wird beispielsweise in der Arbeit von T. G. Phillips, "Determining and verifying object pose from LiDAR measurements to support the perception needs of an autonomous excavator," The University of Queensland, 2016 diskutiert. Bei ausreichender Übereinstimmung zwischen Modell und Messdaten gilt das Objekt als erkannt, und sämtliche Messdaten, die das Modell nicht erklärt, werden als Störung interpretiert. Das betrifft dann natürlich auch harte Objekte und nicht lediglich Umwelteinflüsse. Außerdem bedarf die manuelle Modellbildung erneut eines großen Aufwands.

Im Stand der Technik wird weiterhin die Anwendung von lernenden Verfahren auf Messdaten eines LiDAR-Systems diskutiert. Die Arbeit X.-F. Hana, J. S. Jin, J. Xie, M.-J. Wang und W. Jiang, "A comprehensive review of 3D point cloud descriptors," Feb. 2018. [Online] Available: http://arxiv.org/pdf/1802.02297v1 beschäftigt sich mit merkmalsbasierten lernenden Verfahren zur Klassifikation. Besonders im Kontext des autonomen Fahrens und mit dem Aufkommen hochauflösender 3D-LiDAR-Scanner werden vermehrt Möglichkeiten von tiefen neuronalen Netzen diskutiert. Die LiDAR-Daten werden dabei als Tiefenkarte zugeführt, also einem Bild, in dessen Pixel statt der sonst üblichen Farb- oder Grauwertinformation der gemessene Abstand codiert ist.

In A. Milioto, I. Vizzo, J. Behley, and C. Stachniss, "RangeNet++: Fast and Accurate LiDAR Semantic Segmentation," http://www.ipb.uni-bonn.de/wp-content/papercitedata/pdf/milioto2019iros.pdf, 2019 erfolgt eine punktweise Klassifikation. Eine Objekt- oder konkret Fußgängererkennung ist aus G. Melotti, A. Asvadi, and C. Premebida, "CNN-LIDAR pedestrian classification: combining range and reflectance data," in 2018 IEEE International Conference on Vehicular Electronics and Safety (ICVES), Madrid, Sep. 2018 - Sep. 2018, pp. 1-6 bekannt. Dabei wird ein Mehrkanalbild genutzt, dessen Pixel zusätzlich zur Tiefeninformation noch eine Intensitätsinformation des am jeweiligen Ort empfangenen Lichts enthalten. M. Velas, M. Spanel, M. Hradis, and A. Herout, "CNN for Very Fast Ground Segmentation in Velodyne LiDAR Data," Sep. 2017. [Online] Available: http://arxiv.org/pdf/1709.02128v1 beschreibt eine Bodenerkennung. In V. Vaquero, A. Sanfeliu, and F. Moreno-Noguer, "Deep Lidar CNN to Understand the Dynamics of Moving Vehicles," in 2018 IEEE International Conference on Robotics and Automation (ICRA), Brisbane, QLD, May. 2018 - May. 2018, pp. 4504-4509 erfolgt eine Bewegungsanalyse, in der zwei nacheinander aufgenommene Laserscans zu einem Bild mit vier Kanälen kombiniert werden, um daraus die Bewegungsinformation zu gewinnen.

Die überwiegende Zahl der in der Literatur vorgeschlagenen Verfahren und Netzwerke sind für 3D-LiDAR-Daten optimiert und nicht ohne Weiteres auf einen üblichen 2D-Laserscanner mit nur einer Abtastebene übertragbar.

In Ä. M. Guerrero-Higueras et al., "Tracking People in a Mobile Robot From 2D LIDAR Scans Using Full Convolutional Neural Networks for Security in Cluttered Environments," Frontiers in neurorobotics, vol. 12, p. 85, 2018 werden für eine punktweise Klassifizierung von Personen die gemessenen Winkel- und Abstandsdaten direkt in ein Pixelraster eingetragen. Auf diese Weise entsteht ein dünn besetztes Bild, bei dem die Pixel, auf denen ein Scanpunkt liegt, den Wert Eins oder den Intensitätswert des Scanpunktes und alle anderen Positionen den Wert Null erhalten.

Alternativ können die tiefen neuronalen Netze selbst angepasst werden, so dass sie statt mit einem Bild mit einem 2D-Scan als Eingabedaten umgehen können. Mit einem solchen Verfahren werden beispielsweise in L. Beyer, A. Hermans, and B. Leibe, "DROW: Real-Time Deep Learning based Wheelchair Detection in 2D Range Data," Mar. 2016. [Online] Available: http://arxiv.org/pdf/1603.02636v2 Personen und Rollstühle erkannt.

In C. R. Qi, H. Su, K. Mo, and L. J. Guibas, "PointNet: Deep Learning on Point Sets for 3D Classification and Segmentation," Proceedings of the IEEE conference on computer vision and pattern recognition, 2017 wird kein Bild, sondern direkt die ungeordnete Punktewolke als Eingang des tiefen neuronalen Netzes verwendet. Diese Verfahren sind sowohl für 2D- als auch für 3D-LiDAR-Daten geeignet, bedürfen aber besonders angepasster neuronaler Netze.

Für die Erkennung von Umwelteinflüssen werden alle diese Verfahren nicht eingesetzt. Sie erscheinen auch nur eingeschränkt dafür geeignet, da sie räumliche Informationen verarbeiten. Für viele Störungen, etwa Regen oder Schnee, wäre aber auch das zeitliche Verhalten von Interesse, das herkömmlich weitestgehend unbeachtet bleibt.

Es ist daher Aufgabe der Erfindung, die Auswertung der Abstandsmessdaten eines gattungsgemäßen Sensors zu verbessern.

Diese Aufgabe wird durch einen optoelektronischen Sensor und ein Verfahren zur Erfassung von Abstandsmessdaten von Objekten in einem Überwachungsbereich nach Anspruch 1 beziehungsweise 14 gelöst. Der optoelektronische Sensor kann auch als LiDAR-Sensor im einleitend erläuterten Sinne bezeichnet werden. Eine Messeinheit sendet Licht aus und erzeugt aus dem rückkehrenden Licht ein Empfangssignal. Um eine Ortsauflösung über mehrere Richtungen oder Winkel zu erhalten, wird mit einem beliebigen Scanverfahren abgetastet, das von einer physischen Rotations- oder Schwenkbewegung über ablenkende Mikrosysteme bis zu rein elektronischer Ansteuerung reicht. Zumindest einige Winkel können auch in einem Mehrstrahlsystem gleichzeitig abgetastet werden.

Eine Steuer- und Auswertungseinheit erzeugt die Abstandsmessdaten durch Auswertung des Empfangssignals mit einem Lichtlaufzeitverfahren. Je Messung ist dabei zunächst der Winkel variiert, das wird auch als ein Scan bezeichnet. Durch Messwiederholungen, d.h. mehrere Scans zu aufeinanderfolgenden Zeitpunkten, werden die Abstandsmessdaten dann sowohl winkel- als auch zeitaufgelöst. Das Winkel- und Zeitraster muss nicht regelmäßig sein, aber vorzugsweise sollte sich zumindest das Winkelraster in sich über die Messwiederholungen nicht verändern. Die Steuer- und Auswertungseinheit kann intern, aber auch zumindest teilweise oder ganz außerhalb eines Gehäuses des Sensors angeordnet sein, insbesondere in einem angeschlossenen Rechner, einem Netzwerk oder einer Cloud. Beispielsweise könnten die Aufgaben so verteilt sein, dass die Abstandsmessdaten selbst mittels Lichtlaufzeitverfahren noch intern erzeugt werden, die weitere Verarbeitung dann aber extern erfolgt.

Die Erfindung geht von dem Grundgedanken aus, die Abstandsmessdaten zu einem Bild anzuordnen und es damit den zahllosen Verfahren des maschinellen Lernens zur Bildverarbeitung zugänglich zu machen. Dazu werden Winkel und Zeit als Dimensionen oder Achsen des Bildes verwendet. Bei einer 2D-LiDAR-Erfassung ergibt das ein zweidimensionales Bild, bei dem ohne Beschränkung der Allgemeinheit die X-Achse durch den Winkel und die Y-Achse durch die Zeit gegeben ist. Der Wert eines jeweiligen Pixels entspricht dem für diesen Winkel und diese Zeit gemessenen Abstand. Bei 3D-LiDAR-Erfassung kommt eine weitere Achse für den zweiten Winkel hinzu, typischerweise den Elevationswinkel bezüglich einer mittleren Abtastebene. Die Messdaten eines mehrstrahligen Laserscanners beispielsweise können wahlweise wie ein Bild aus 3D-LiDAR-Daten oder wie mehrere Bilder aus 2D-LiDAR-Daten je Strahl verarbeitet werden.

Das Bild ermöglicht nun, zeitveränderliche LiDAR-Daten mit einem Bildklassifikationsverfahren des maschinellen Lernens auszuwerten. Dabei wird den Pixeln eine jeweilige Klasse zugeordnet, die insbesondere dazu dient, Umwelteinflüsse zu erkennen.

Die Erfindung hat den Vorteil, dass eine besonders robuste Klassifikation ermöglicht wird, mit der die für eine bestimme Anwendung spezifischen Eigenschaften berücksichtigt werden. Durch den datenbasierten Ansatz ist das ohne vertiefte Fachkenntnisse möglich, da die Eigenschaften implizit aus den Daten gelernt werden. Anders als bei den einleitend diskutierten lernenden Verfahren wird kein klassisches Bild mit Ortsauflösung auf allen Achsen klassifiziert, sondern die zeitliche Komponente als Achse des Bildes einbezogen. Dadurch können Historien beurteilt werden, was gerade bei Umwelteinflüssen eine große Rolle spielen kann. Eine besondere Auswahl, Anpassung oder Kombination passender Filter muss nicht länger vorgenommen werden.

Das Bildklassifikationsverfahren unterscheidet bevorzugt ein Objekt von einer Störung durch Umwelteinflüsse, insbesondere durch Staub, Gischt, Nebel, Regen oder Schnee. Die Klassifikation hat also zum Ziel, den Pixeln eine zusätzliche Eigenschaft als Störung und festes Objekt zuzuweisen, bevorzugt binär in genau diesen beiden Klassen. Dann kann beispielsweise eine nachgelagerte Logik zur Objektklassifikation, Kollisionsvermeidung oder sonstigen Anwendung die Klasseninformation der Pixel nutzen, um robustere und verlässlichere Ergebnisse zu liefern oder Entscheidungen zu treffen.

Die Steuer- und Auswertungseinheit ist bevorzugt dafür ausgebildet, Abstandsmessdaten zu Pixeln zu verwerfen, die als Störung klassifiziert sind. Die zu verwerfenden Pixel können beispielsweise auf einen entsprechenden Wert Null oder NIL gesetzt werden. Statt Pixel mit Störungen vollständig zu verwerfen, können sie nachgelagert anders ausgewertet werden, beispielsweise mit geringerem Beitrag bei einer nachgeordneten Objektbewertung.

Die Steuer- und Auswertungseinheit ist bevorzugt dafür ausgebildet, zu den Pixeln zusätzlich zu den Abstandswerten einen Intensitätswert zu bestimmen. Die Intensität entspricht dem Pegel des Empfangssignals insbesondere im Bereich eines während des Lichtlaufzeitverfahrens erfassten Pulsechos und wird auch als Remissionswert, Helligkeitswert oder RSSI (Received Signal Strength Indicator) bezeichnet. Damit entsteht ein multimodales Bild oder Mehrkanalbild mit zwei Messwerten je Pixel. Die Intensitätswerte können auch dadurch berücksichtigt sein, dass ein weiteres Bild analog demjenigen mit den Abstandswerte für die Intensitätswerte erzeugt und dem Bildklassifikationsverfahren zeitgleich oder nacheinander zugeführt wird.

Die Steuer- und Auswertungseinheit ist bevorzugt dafür ausgebildet, zu den Pixeln mehrere Abstände zu bestimmen. Bei einem pulsbasierten Lichtlaufzeitverfahren kann es mehrere Empfangspulse oder Echos geben, aus denen jeweils ein Abstand gemessen werden kann. Das gilt beispielsweise bei einer Messung durch eine Glasscheibe oder ein sonstiges (halb-)transparentes Objekt auf ein weiteres Objekt dahinter, wo sowohl die Glasscheibe als auch das Objekt je einen Abstand liefert. Im Zusammenhang mit der Erfindung sind die halbtransparenten Objekte insbesondere Störungen, also ein Nebelecho oder ein Echo durch Regentropfen und dergleichen. Durch Messen mehrerer Abstände entsteht ein Mehrkanalbild, dessen Kanäle den mehreren Abständen entsprechen, etwa ein Dreikanalbild bei Berücksichtigung von drei Echos. Wird eine weitere Größe wie die Intensität gemessen, so verdoppelt sich die Kanalzahl, so dass dann beispielsweise ein Sechskanalbild entsteht. Damit sind zusätzliche Informationen umfasst, die auch in den klassischen Ansätzen benutzt werden: Ein Teilchenfilter wertet den Abstand, ein Nebelfilter die Intensität und ein Echofilter die mehreren Echos aus, und das Mehrkanalbild enthält alle zugrundeliegende Information. Die zahlreichen existierenden lernenden Verfahren erlauben in der Regel auch die Analyse von Mehrkanalbildern, so dass auch hierfür auf bekannte und bewährte Klassifikationsverfahren beziehungsweise tiefe neuronale Netze zurückgegriffen werden kann. Anstelle eines Mehrkanalbildes ist die Auswertung mehrerer Bilder mit der Information einiger oder einzelner Kanäle vorstellbar.

Die Steuer- und Auswertungseinheit ist bevorzugt dafür ausgebildet, für das Anordnen zu einem Bild Abstandsmessdaten für Pixel zu interpolieren, um auch zu Winkeln und/oder Zeiten Abstandswerte anzugeben, für die ursprünglich nicht gemessen wurde. Ein LiDAR-System, insbesondere ein Laserscanner, erzeugt die Messwerte typischerweise nicht in regelmäßiger Anordnung, sondern als Punktwolke. Dabei können die gegenseitigen Winkelabstände durchaus unregelmäßig sein. Die gemessenen Abstände, soweit relevant auch die gemessenen Intensitäten, werden nach dieser Ausführungsform für das Bild auf eine gleichmäßige Winkelauflösung interpoliert. Die Messperiode und der Zeitabstand zwischen zwei Messwiederholungen ist eher konstant, darf aber erfindungsgemäß auch variieren. Auch bei konstanter Messperdiode muss die Zeitauflösung der Abstandsmessdaten nicht regelmäßig sein, beispielsweise kann die zu berücksichtigende Historie, statt durchgehend die letzten n Messungen zu enthalten, nur jeden i-ten Scan oder eine mit dem Alter der Scans immer weiter ausgedünnte Auswahl sein.

Die Steuer- und Auswertungseinheit ist bevorzugt dafür ausgebildet, aus dem Bild Abstandsmessdaten zu den Winkeln und/oder Zeiten rückzurechnen, in denen eine Lichtlaufzeit bestimmt wurde, und den Abstandsmessdaten eine jeweilige Klasse aus dem Pixel oder den Pixeln zuzuweisen, die in Nachbarschaft des jeweiligen Winkels und/oder der jeweiligen Zeit liegen. Das ist sozusagen die Invertierung der Interpolation des vorigen Absatzes, wobei die Klassifikationen der Pixel aus der Anordnung innerhalb des Bildes wieder in diejenige der ursprünglichen Abstandsmessdaten gebracht wird. Damit entspricht das Format der nun klassifizierten Abstandsmessdaten wieder dem ursprünglichen, und das kann nachgelagerte Auswertungen vereinfachen beziehungsweise schon existierender nachgelagerter Auswertung leichter zugänglich machen. Da die Winkel des Bildes und der Abstandsmessdaten gegeneinander verschoben sein können, wird die Klasse des nächstliegenden Winkels im Bild oder beispielsweise eine Klasse nach Mehrheitsentscheid in benachbarten Winkeln zugewiesen.

Das Bildklassifikationsverfahren ordnet bevorzugt nur Pixeln zu einer festen Zeit eine Klasse zu. Während also ein ganzes Bild mit einer Historie die Eingangsgröße darstellt, wird als Ausgangsgröße nur eine Klassifikation beschränkt auf eine feste Zeit erzeugt. Diese feste Zeit ist praktisch eine Zeile (oder je nach Konvention auch Spalte) des Bildes. In der Regel besteht kein Interesse daran, die gesamte Historie zu klassifizieren, sondern nur eine bestimmte Messung zu einer bestimmten Zeit, wofür die Historie letztlich nur Hilfsdaten liefert. Durch die Beschränkung auf nur eine feste Zeit kann das Bildklassifikationsverfahren vereinfacht und beschleunigt werden. Die feste Zeit ist vorzugsweise die Gegenwart, also die jüngste Messung oder der jüngste Scan, um damit insbesondere Echtzeitanforderungen oder Quasi-Echtzeitanforderungen gerecht zu werden. Ohne Echtzeitanforderungen wäre auch denkbar, eine andere Zeit zu wählen. Die Klassifikation beruht dann zum Teil auf einer Historie und zum Teil auf einer Zukunft in beliebiger Quotelung einschließlich Nichtberücksichtigung von Historie oder Zukunft.

Das Bildklassifikationsverfahren weist bevorzugt ein tiefes neuronales Netz (Deep Neural Network) auf. Mit derartigen Strukturen können auch komplexe Bildklassifikationen sehr verlässlich vorgenommen werden. Alternative Bildklassifikationsverfahren des maschinellen Lernens sind Support Vector Machines oder Entscheidungsbäume, die als Merkmale die Entfernungs- und Intensitätswerte des aktuellen Punktes und seiner Nachbarschaft bei geeigneter Normierung verwenden.

Das Bildklassifikationsverfahren ist bevorzugt vorab mit Bildern trainiert, zu deren Pixel die Klasse bekannt ist. Derartige gelabelte oder annotierte Bilder geben vor, was eine relevante Störung und was ein Objekt ist. Die Struktur der Trainingsbilder entspricht derjenigen, wie sie dem Bildklassifikationsverfahren später aus Abstandsmessdaten zugeführt werden. Trainingsbilder weisen also mindestens eine Winkelachse und eine Zeitachse auf, und die Pixel codieren Abstandsmesswerte und gegebenenfalls Intensitäten.

Die bekannte Klasse ist bevorzugt durch gezielte Störung bestimmter Teilbereiche des Überwachungsbereichs vorgegeben. Auf diese Weise können Trainingsbilder erzeugt werden, die gezielt bestimmte einzulernende Aspekte zeigen. Außerdem wird hierdurch die Annotation der Bilder vereinfacht, da der Ort der Störung weitgehend bekannt ist. Die sich so ergebende Klassifikation kann dann von Hand nachgearbeitet werden. Denkbar ist auch, die Trainingsbilder gänzlich von Hand zu klassifizieren, wobei dies natürlich nicht Pixel für Pixel geschehen muss, sondern beispielsweise durch Einkreisen bestimmter Regionen oder eine automatische Vorsegmentierung und händische Auswahl von Segmenten, die zu Objekten beziehungsweise Störungen gehören. Eine weitere Möglichkeit, annotierte Trainingsbilder zu erhalten, besteht in der Anwendung eines der einleitend genannten herkömmlichen Verfahren mit Filtern oder Objektmodellen auf dafür geeignete Bilder. Durch das Training kann das Bildklassifikationsverfahren dann später auf andere Anwendungen und/oder Störungssituationen verallgemeinern.

Das Bildklassifikationsverfahren ist bevorzugt auf kleine Fehler für eine bestimmte Klasse optimiert. Dadurch wird ein weiterer Vorteil zumindest einiger Bildklassifikationsverfahren des maschinellen Lernens ausgenutzt, die gezielt eine bestimmte Klasse bevorzugen und die Zuordnung zu dieser Klasse besonders genau vornehmen, was mit einem bewusst in Kauf genommenen größeren Fehler für die andere Klasse einhergeht. Beispielsweise werden möglichst viele Objektpixel als solche erkannt, um den Preis, dass auch einige Störungen noch als Objekt erkannt werden. Das wäre etwa bei einer Anwendung des Kollisionsschutzes sinnvoll, wo fälschlich als Objekt behandelte Störungen zwar Einbußen der Verfügbarkeit, jedoch niemals ein Sicherheitsproblem mit sich bringen. Im umgekehrten Fall werden auch einige Objektpunkte als Störung aussortiert, aber dafür sind die verbleibenden Objektpunkte auch verlässlich. Das genügt beispielsweise zum Vermessen oder Erkennen eines Fahrzeugs bei der Verkehrsüberwachung, wo als Objektpunkt behandelte Störungen zu groben Fehleinschätzungen führen könnten.

Der optoelektronische Sensor ist bevorzugt als 2D-Laserscanner ausgebildet. Weist dessen Messeinheit insbesondere eine bewegliche Ablenkeinheit zur periodischen Abtastung des Überwachungsbereichs auf, so handelt es sich um einen klassischen Laserscanner mit Schwing- bzw. Drehspiegel oder entsprechend beweglichem Messkopf. Das Scanverfahren längs nur einer Linie zur Erfassung von 2D-LiDAR-Daten kann aber auch anders erreicht werden, etwa durch Mikrosysteme oder elektronische Ansteuerung. Die einleitend diskutierten bekannten lernenden Verfahren für LiDAR-Daten nutzen eine Tiefenkarte mit zwei lateralen Raumdimensionen X, Y und dem gemessenen Abstand als Z-Achse. Sie sind damit auf 2D-LiDAR-Daten nicht anwendbar. Erfindungsgemäß bildet die Zeit eine zusätzliche Achse und schafft so eine Datenstruktur, die eigentlich kein Bild im herkömmlichen Sinne ist, aber als solches verarbeitet werden kann. Damit können sämtliche Erkenntnisse und existierenden Implementierungen zu bildverarbeitenden Verfahren des maschinellen Lernens, insbesondere tiefen neuronalen Netzen, auch für einen 2D-Laserscanner angewandt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners;
- Fig. 2: eine Übersichtsdarstellung eines Klassifikationsmodells für LiDAR-Daten insbesondere eines Laserscanners;
- Fig. 3: eine Illustration der Aufbereitung von LiDAR-Daten als Bild;
- Fig. 4: eine Illustration der pixelweisen Klassifikation von Bildern aus LiDAR-Daten mit einem Verfahren des maschinellen Lernens;
- Fig. 5: eine weitere Illustration der pixelweisen Klassifikation mit Veranschaulichung eines Zeitbereichs, auf den die pixelweise Klassifikation beschränkt ist;
- Fig. 6: eine Illustration der Rückführung von auf eine Bildzeile bezogenen Klassifikationen auf LiDAR-Daten;
- Fig. 7: eine beispielhafte Darstellung eines mehrkanaligen Trainingsbildes mit Abstands- und Intensitätsinformationen und vorgegebenen zugehörigen Klassen; und
- Fig. 8: eine Illustration des Einlernens des Verfahrens des maschinellen Lernens mit einem Trainingsbild.

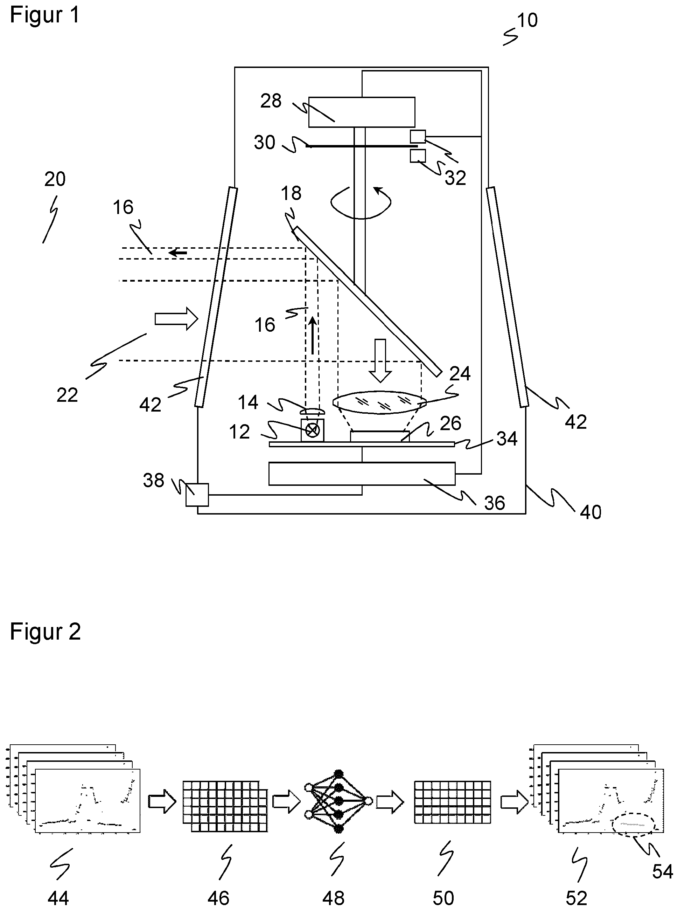

Fig. 1 zeigt eine schematische Schnittdarstellung durch einen 2D-Laserscanner 10 als Beispiel eines optoelektronischen Sensors zur Erfassung von LiDAR-Daten oder Abstandsmessdaten. In dem Laserscanner 10 erzeugt ein Lichtsender 12, beispielsweise mit einer Laserlichtquelle, mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode, einer APD (Avalanche Photo Diode) oder einer SPAD-Anordnung (Single-Photon Avalanche Photo Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt. In der dargestellten Ausführungsform sind Lichtsender 12 und Lichtempfänger 26 auf einer gemeinsamen Leiterkarte 34 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit vom Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Distanz- oder Abstandsmessung nach einem Lichtlaufzeitverfahren erfolgt in einer Steuer- und Auswertungseinheit 36, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung.

Die Steuer- und Auswertungseinheit 36 kann über eine Schnittstelle 38 mit übergeordneten Systemen, wie einem dedizierten Auswertungsrechner, einer übergeordneten Steuerung, einem lokalen Netzwerk oder einer Cloud in Verbindung stehen. Die bisher beschriebene Auswertung mittels Lichtlaufzeitverfahren und vor allem die noch zu beschreibende weitere Auswertung der Abstandsmessdaten kann praktisch beliebig auf die interne Steuer- und Auswertungseinheit 36 und externe Recheneinheiten verteilt sein. Vorzugsweise erfolgt aber zumindest die Abstandsmessung mittels Lichtlaufzeitverfahren intern in der Steuer- und Auswertungseinheit 36, und es ist auch denkbar, die gesamte Auswertung intern vorzunehmen. Dann umfasst die Steuer- und Auswertungseinheit vorzugsweise nicht nur einen, sondern mehrere Rechenbausteine, wie FPGAs (Field-Programmable Gate Array), ASICs (Application-Specific Integrated Circuit), Mikroprozessoren oder GPUs (Graphics Processing Unit). Alle genannten internen Funktionskomponenten sind in einem Gehäuse 40 angeordnet, das im Bereich des Lichtaus- und Lichteintritts eine Frontscheibe 42 aufweist.

Die durch die Abtastung jeweils erhaltenen Polarkoordinaten entsprechen einem Abtastpunkt. Je Umdrehung der Ablenkeinheit wird eine Abtastebene des Überwachungsbereichs 20 abgetastet und eine entsprechende Punktwolke erzeugt. Eine solche Messung wird auch als Scan bezeichnet. Über mehrere Umdrehungen und damit Messwiederholungen entsteht eine Vielzahl von Scans in einer zeitlichen Abfolge. Bei einem 2D-Laserscanner sind die einzelnen Scans jeweils 2D-LiDAR-Daten, wobei die eine Dimension der Winkel und die andere Dimension der zu dem Winkel gemessene Abstand ist. Es gibt auch mehrstrahlige Laserscanner, in denen eine Schar von Ebenen in unterschiedlichem Elevationswinkel abgetastet wird, oder Laserscanner mit in Elevation variabler Ausrichtung. Dadurch werden entsprechend 3D-LiDAR-Daten erfasst, mit zwei Dimensionen des Umdrehungs- und Elevationswinkels und einer Dimension des einem Winkelpaar zugeordneten gemessenen Abstands. Selbstverständlich ist jeweils eine Umrechnung aus Polar- oder Kugelkoordinaten in kartesische Koordinaten möglich.

Die Erfindung umfasst sowohl 2D-LiDAR-Daten als auch 3D-LiDAR-Daten. Weiterhin ist das Scanprinzip nicht auf die beschriebene mechanische Rotation beschränkt. Stattdessen können Mikrosysteme, wie MEMS-Spiegel, oder elektronische Ansteuerungen wie bei einem Phased Optical Array oder akusto-optische Modulatoren zum Einsatz kommen. Denkbar ist weiterhin ein sendeseitiges Array, etwa eine VCSEL-Zeile oder VSCEL-Matrix, und/oder ein empfangsseitiges Array, insbesondere eine SPAD-Zeile oder SPAD-Matrix, mit Auswahl der jeweiligen Scanrichtung durch Aktivierung der entsprechenden Einzelelemente, vorzugsweise passend paarweise auf Sende- und Empfangsseite. Schließlich ist denkbar, eine Vielzahl von Scanrichtungen gleichzeitig zu erfassen. Der Laserscanner 10 wird erfindungsgemäß vorzugsweise im Außenbereich (Outdoor-LiDAR) oder in besonders staubigen Umgebungen eingesetzt, damit die nun zu beschreibende Störungserkennung ihre Stärken ausspielen kann.

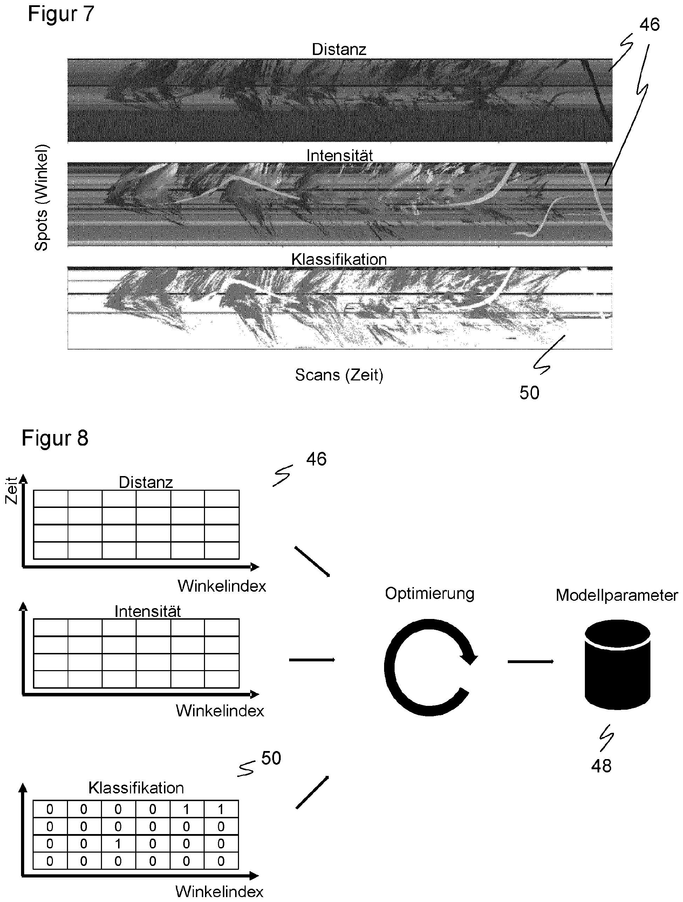

Figur 2 gibt einen Überblick über ein Klassifikationsmodell, das einem jeweiligen Scanpunkt eine Klasse zuordnet, insbesondere binär eine von zwei Klassen "Störeinfluss" und "(hartes) Objekt". Die weitere Beschreibung erfolgt am Beispiel eines tiefen neuronalen Netzes als Klassifikator als bevorzugte Ausführungsform. Andere Verfahren des maschinellen Lernens, etwa Entscheidungsbäume oder Supportvektormaschinen, wären auch denkbar. Das Verfahren besteht aus zwei Phasen:
In einer später unter Bezugnahme auf die Figuren 7 und 8 noch näher erläuterten Trainingsphase wird ein Bildklassifikationsverfahren, hier ein tiefes neuronales Netz, mit LiDAR-Daten trainiert, zu denen die gewünschte Klassifikation bekannt ist, um die Parameter des Bildklassifikationsverfahrens zu bestimmen. Die erforderliche Festlegung der jeweiligen Klassen (Labeling, Annotation) erfolgt typischerweise manuell oder mit manueller Unterstützung.

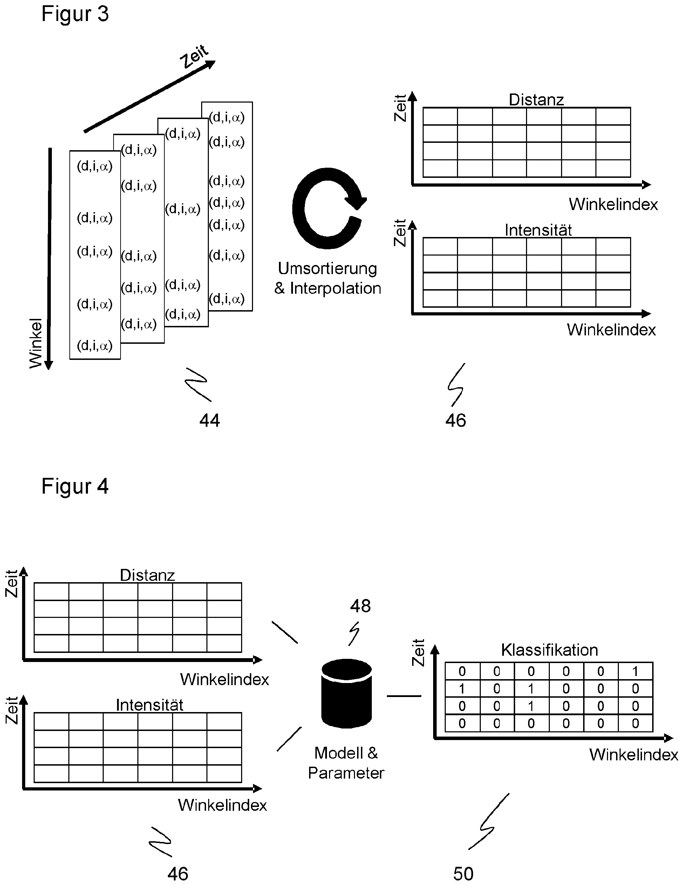

In der in Figur 2 gezeigten Anwendungsphase werden die LiDAR-Daten mit dem trainierten Bildklassifikationsverfahren klassifiziert. Die einzelnen Schritte werden zunächst grob und dann unter Bezugnahme auf die Figuren 3 bis 6 jeweils genauer erläutert. Ausgangspunkt sind in diesem Ausführungsbeispiel 2D-LiDAR-Daten 44, d.h. gemessene Abstände in Abhängigkeit vom jeweiligen Winkel, die als Punktwolken mehrerer Scans (in der Abbildung dargestellt als Schichten) entsprechend den jeweiligen Messzeiten und folglich mit einer gewissen Historie vorliegen. Diese Scans werden zunächst zu Bildern 46 angeordnet, hier zu je einem Abstands- und Intensitätsbild und alternativ nur zu einem Abstandsbild, wobei auf der einen Achse der Winkel und auf der anderen Achse die Zeit abgetragen ist und die Pixel den gemessenen Abstand beziehungsweise die gemessene Intensität codieren. Das Bild oder die Bilder werden dem Bildklassifikationsverfahren beziehungsweise tiefen neuronalen Netz 48 zugeführt, das eine pixelweise Klassifikation 50 in Störung und Objekt bestimmt. Später wird noch dargelegt, dass ausgangsseitig vorzugsweise lediglich eine Bildzeile statt des gesamten Bildes klassifiziert wird. Die Klassifikation 50 wird abschließend wieder auf die nun klassifizierten 2D-LiDAR-Daten 52 übertragen. In Figur 2 ist beispielhaft der umkreiste Teil 54 der Scanpunkte als Störung klassifiziert.

Figur 3 illustriert die Aufbereitung der LiDAR-Daten 44 als Bild 46, d.h. den ersten Verarbeitungsschritt der Figur 2. Dieser Verarbeitungsschritt kann auch entfallen oder trivial werden, insbesondere dann, wenn die Winkel- und Zeitauflösung jeweils regelmäßig ist.

Die LiDAR-Daten 44 liegen zunächst als Punktwolke vor, die beispielsweise als Vektoren mit Distanz d, Intensität i und Winkel α repräsentiert sein können. Als vierte Dimension tritt noch die Zeit hinzu, die aber in Figur 3 stattdessen durch die verschiedenen Schichten gezeigt ist. Für die Erfindung kommt es auf die konkrete Repräsentation der Punktwolken nicht an.

Die Winkel a, an denen ein Abstand gemessen wird, können allgemein unregelmäßig verteilt sein und sich von Scan zu Scan zu unterscheiden. Entsprechend sind die Vektoren in der Illustration der Figur 3 verteilt. Auch die Messperiode oder der Abstand zwischen zwei Scans auf der Zeitachse muss nicht regelmäßig sein. Vorzugsweise sind zumindest die Winkel in jedem Scan in einer gleichen Weise oder sogar regelmäßig verteilt. Das vereinfacht die Interpolation und Anordnung. Selbst bei einem gleichmäßigen Winkelraster kann aber eine Interpolation zur Auflösungsanpassung erforderlich sein.

Durch Umsortierung und Interpolation werden die LiDAR-Daten in ein regelmäßiges Pixelraster eines Bildes 46 eingeordnet. In dem Bild kann nun ein Winkelindex betrachtet werden, da jetzt die Winkelabstände äquidistant sind. Die Besonderheit bei diesem Bild ist, dass nicht einfach Polarkoordinaten in kartesische Koordinaten umgerechnet werden. Vielmehr ist eine Achse, hier die Y-Achse, eine Zeitachse entsprechend den Scans zu unterschiedlichen Zeitpunkten. Das Bild ist keine herkömmliche Tiefenkarte, sondern es sind mit Winkel und Zeit völlig unterschiedliche physikalische Größen als Bilddimensionen gewählt. Durch diese Datendarstellung wird bei einer Klassifikation sowohl räumliche als auch zeitliche Informationen berücksichtigt, was zu besseren Klassifikationsergebnissen führt. Zugleich ermöglicht das Format als Bild den Einsatz von Bildklassifikationsverfahren, statt einen gesonderten Klassifikator für Punktwolken entwerfen zu müssen.

Gemäß Figur 3 werden zwei Bilder erzeugt, nämlich ein Abstandsbild und ein Intensitätsbild (Remission, RSSI). Der jeweilige Wert eines Pixels ist der zu diesem Winkel und dieser Zeit gemessene Abstand beziehungsweise die dort gemessene Intensität, gegebenenfalls erhalten durch Interpolation aus der Nachbarschaft. Statt zweier Bilder könnte auch ein mehrkanaliges Bild mit jeweils einem Paar (Abstand, Intensität) pro Pixel erzeugt werden, oder die Intensität bleibt nochmals alternativ unberücksichtigt. Umgekehrt sind weitere Messgrößen eines Mehrkanalbildes oder weiteren Bildes vorstellbar.

Ein Beispiel für weitere Messgrößen ist ein mehrechofähiges System. Damit bestimmt ein Abtaststrahl nicht nur den Abstand zu einem Objekt, sondern zu mehreren Objekten, die hintereinander auf dem Abtaststrahl liegen. Typischerweise geschieht das, wenn ein Teil des Sendelichtstrahls 16 von einem teiltransparenten Objekt, wie einem Nebel- oder Regentröpfchen, und ein anderer Teil von einem weiter entfernten Objekt zurückgeworfen wird. Dadurch entstehen bei einem pulsbasierten Lichtlaufzeitverfahren mehrere Empfangspulse, Peaks oder Echos im Empfangssignals, die jeweils eine Abstandsmessung ermöglichen. Ebenso wie ein Paar (Abstand, Intensität) kann also ein Paar (erste Abstand, zweiter Abstand) als Mehrkanalbild oder als Paar von Bildern verarbeitet werden. Kommt die Intensität hinzu, ergeben sich zwei mal zwei Kanäle oder Bilder, entsprechend mehr bei einem mehr- statt zweiechofähigen System.

Figur 4 illustriert die eigentliche Klassifikation der Bilder 46, d.h. den zweiten Verarbeitungsschritt der Figur 2. Das tiefe neuronale Netz 48 ist hier als allgemeines parametriertes Modell gezeigt, um nochmals zu unterstreichen, dass auch andere Verfahren des maschinellen Lernens zum Einsatz kommen können. Die Bilder 46 mit den Distanz- und Intensitätsdaten als Eingangsdaten des tiefen neuronalen Netzes 48 können auf bestimmte Zeilen beschränkt werden, um nur eine gewisse Historie von vier Scans wie gezeigt oder eine andere Anzahl Scans zu berücksichtigen.

Das tiefe neuronale Netz 48 sagt pixelweise eine Klassifikation 50 voraus. Dabei steht rein beispielhaft eine Eins für Störung und eine Null für Objekt. Als bevorzugte Implementierung des tiefen neuronalen Netzes hat sich das zur Bildsegmentierung verwendete U-Net bewährt, das in O. Ronneberger, P. Fischer, and T. Brox, "U-Net: Convolutional Networks for Biomedical Image Segmentation," May. 2015. [Online] Available: http://arxiv.org/pdf/1505.04597v1 beschrieben wird.

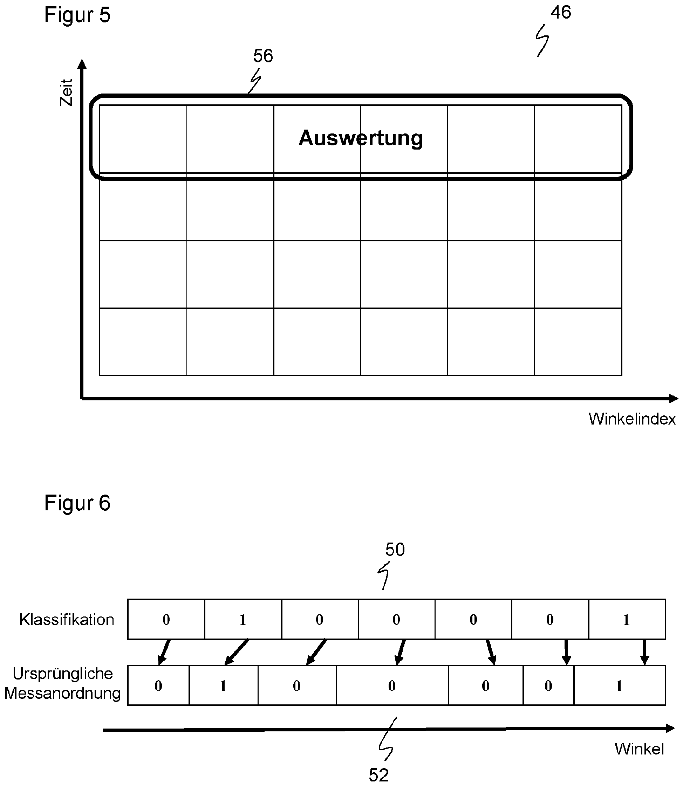

Figur 5 zeigt nochmals ein Bild 46 zur Veranschaulichung eines Zeitbereichs 56, auf den sich die Klassifikation 50 optional beschränken kann. In der gewählten Repräsentation mit der Zeit auf der Y-Achse steht jede Bildzeile für einen Scan zu einem bestimmten Messzeitpunkt. Die Klassifikation wird meist nur für die Gegenwart, also den aktuellen Scan und damit die oberste Bildzeile des Zeitbereichs 56 benötigt. Dadurch können Scans in Echtzeit oder Quasi-Echtzeit beurteilt werden.

Anders als bei herkömmlicher Bildsegmentierung ist somit die Ausgabe vorzugsweise auf eine Bildzeile beschränkt. Die Eingangsgröße jedoch ist das ganze Bild mit dem zu beurteilenden aktuellen Scan und einer gewissen Historie von weiteren Scans. Diese Klassifikation wird für jeden Messzeitpunkt oder Scan durchgeführt. Alternativ kann eine Störbeurteilung auch nur zyklisch oder stichprobenartig zu bestimmten Messzeitpunkten erfolgen. Durch die Beschränkung der Ausgabe auf nur eine Bildzeile kann die Anzahl der freien Parameter reduziert und die Qualität des Klassifikationsmodells in Bezug auf Geschwindigkeit, Menge der Trainingsdaten oder Genauigkeit verbessert werden. Ausgeschlossen ist jedoch nicht, jeweils alle Pixel des Bildes 46 zu klassifizieren und bei Bedarf erst anschließend das Auslesen oder weitere Verarbeiten auf einen Teilbereich zu beschränken. Ebenso wäre bei diesem Vorgehen eine Kombination der Klassifikationsergebnisse für Pixel, die jeweils zum gleichen Messzeitpunkt gehören, von mehreren Bildern möglich, beispielsweise durch Mehrheitsbildung.

Figur 6 illustriert die Rückführung der für das Format der Bilder 46 bestimmten Klassifikation 50 auf LiDAR-Daten, d.h. den dritten Verarbeitungsschritt der Figur 2. Dieser Verarbeitungsschritt ist optional, je nachdem, in welcher Form der nachgelagerten Datenverarbeitung die Informationen aufbereitet werden sollen. Der Vorteil einer Rückführung auf LiDAR-Daten ist, dass das Ausgabeformat demjenigen der ursprünglichen LiDAR-Daten entspricht und deshalb vorhandene nachgelagerte Auswertungen damit womöglich in einer gewohnten Weise leichter und mit weniger Anpassungen zurechtkommen.

Beispielsweise wird an die Vektoren der Punktwolke zusätzlich das Klassifikationsergebnis angehängt.

Die Klassifikation 50 des tiefen neuronalen Netzes 48 liegt zunächst im gleichmäßigen Format der Bilder 46 vor. Wie zu Figur 3 diskutiert, sind die LiDAR-Daten selbst im Allgemeinen als Punktwolke in unregelmäßigem Winkelabstand gemessen. Für die Rückführung wird jedem Punkt oder Vektor der Scans ein Klassifikationsergebnis zugewiesen, das sich aus den benachbarten Winkeln ergibt. Dies ist in Figur 6 durch Pfeile angedeutet. Eine Möglichkeit ist, zu dem Winkel des Vektors den nächstgelegenen Winkel des Bildes zu suchen und aus diesem Pixel das Klassifikationsergebnis zu kopieren. Eine andere Möglichkeit besteht darin, in einer gewissen Winkelumgebung des Bildes zu dem gesuchten Winkel des Vektors eine Mehrheitsentscheidung der Klassifikationsergebnisse zu treffen. Andere Arten der Interpolation sind auch denkbar.

Dabei beschränkt sich die Darstellung in Figur 6 auf eine Bildzeile oder einen Scan zu einem festen Zeitpunkt entsprechend den Ausführungen zu Figur 5. Diese Rückführung auf LiDAR-Daten erfolgt also ebenso wie die Klassifikation 50 selbst zeilenweise oder pro Scan beziehungsweise Messung. Es wäre alternativ denkbar, eine Klassifikation 50 für ein ganzes Bild 46 auf die zugrundeliegenden Scans zurückzurechnen, wobei dann aber für jeden Scan effektiv eine unterschiedliche Historie eingeht. Dann wird vorzugsweise eine der Figur 6 entsprechende Rückführung auch in der zeitlichen Dimension vorgenommen.

Figur 7 zeigt ein Beispiel eines gelabelten oder annotierten Trainingsbildes, mit dem das tiefe neuronale Netz 48 trainiert wird. Ein solches Trainingsbild enthält jeweils ein Distanz- und Intensitätsbild 46 aus LiDAR-Daten und eine zugehörige Klassifikation 50. Das Distanz- und Intensitätsbild 46 ist jeweils graucodiert, in der Klassifikation 50 sind harte Objekte hell, Störungen dunkel dargestellt. Eine Vielzahl von Scans zu verschiedenen aufeinanderfolgenden Zeiten der Messung ist über die X-Achse aufgetragen, und auf der Y-Achse sind je Scan die Distanz- oder Intensitätswerte über den Winkel verteilt. X-Achse und Y-Achse sind also gegenüber den bisherigen Darstellungen vertauscht, um zur Veranschaulichung mehr Scans unterzubringen. Das dargestellte Trainingsbild kann abschnittsweise als Vielzahl von Trainingsbildern aufgefasst werden. Dennoch ist in der Praxis meist eine Vielzahl solcher Bilder erforderlich, um das tiefe neuronale Netz 48 robust zu trainieren.

Für das Datensammeln der Trainingsbilder wird auch ein gewisses Expertenwissen benötigt, das jedoch stärker anwendungsbezogen ist und weit geringere Anforderungen stellt als wie herkömmlich passende Filter zu entwerfen, auszuwählen, parametrieren und kombinieren, zumal dazu Spezialwissen über die Auswirkungen von Umwelteinflüssen auf die Hardware und Software eines LiDAR-Systems gefordert ist. Außerdem ist ein tiefes neuronales Netz 48 robuster gegenüber Szenarien, die vorab unbeachtet blieben. Das Erfassen von Bildern 46 für die Trainingsdaten und vor allem das Labeln und Annotieren, also das Vorgeben einer gewünschten Klassifikation 50, bedeutet einen gewissen Aufwand. Dieser Aufwand lässt sich aber begrenzen, indem beispielsweise Szenarien mit bekanntem Aufbau beziehungsweise gezielte Störungen in bestimmten Teilbereichen gewählt werden. Außerdem werden natürlich nicht unbedingt einzelne Pixel gelabelt, sondern vorzugsweise ganze Bereiche, und dabei können klassische Filter und Segmentierungsverfahren zumindest eine unterstützende Vorauswahl treffen.

Figur 8 illustriert die Trainingsphase. Die Bausteine sind im Grunde schon alle erklärt, die Trainingsphase kehrt lediglich das Vorgehen um. Unbekannt und in einem Optimierungsverfahren einzulernen sind im Training die Modellparameter, insbesondere die Gewichte in dem neuronalen Netz 48, während die Klassifikation 50 vorgegeben wird. In der Anwendungsphase wird dann die Klassifikation 50 gesucht, während die Modellparameter aus dem Training bekannt sind.

Die Erfindung wird besonders vorteilhaft in Anwendungen eingesetzt, bei denen die Umgebung weitgehend bekannt, aber dennoch in Teilen flexibel ist. Ein Beispiel wäre die Verkehrsklassifikation. Hier können Trainingsdaten von verschiedenen Fahrzeugen bei trockener und nasser Straße, also mit Gischt, aufgenommen und von Hand klassifiziert werden. Nach dem Trainingsprozess ermöglicht die Klassifikation, Messwerte von Gischt und Messwerte von Fahrzeugen zu trennen, wodurch die Bestimmung der Fahrzeugparameter vereinfacht wird, wie Höhe, Länge, Breite, Anhänger vorhanden und dergleichen. Ein anderes Beispiel wäre die Stauberkennung bei Lastwagen oder Baggern im Bergbau. Hier sind zur Kollisionsvermeidung Staubwolken, die durchfahren werden können, von harten Objekten zu unterscheiden, mit denen es eine Kollision geben könnte.

Viele lernende Verfahren erlauben eine Anpassung der Falsch-Positiv- bzw. Falsch-Negativ-Rate beispielsweise durch geeignete Wahl von Schwellwerten. Auf diese Weise kann die Qualität der Klassifikationsergebnisse an die Erfordernisse der Anwendung angepasst werden. Bei einer Verkehrsklassifikation etwa kann es akzeptabel sein, wenn Messwerte vom Fahrzeug als Gischt klassifiziert werden, solange möglichst wenige Gischt-Messungen als Fahrzeug klassifiziert werden Dies ist wichtig, um Fahrzeugabmessungen nicht zu überschätzen. Bei Bergbauanwendungen dagegen wäre umgekehrt zu vermeiden, Messwerte von harten Objekten als Staub zu klassifizieren, wohingegen eine Klassifikation eines Staubmesswertes als hartes Objekt eher akzeptabel wäre. Das würde nur die Verfügbarkeit des Systems reduzieren, aber zu Kollisionen kommt es dadurch nicht.

Bisher wurde vorausgesetzt, dass die Bilder 46 sich über den gesamten erfassten Winkelbereich erstrecken. Um Speicher für das Bildklassifikationsverfahren zu sparen, wäre es denkbar, pro Scan mehrere Winkelbereiche zu definieren, die einander ergänzen und möglicherweise an den Rändern überlappen. Weiterhin steht der Winkel nur vorzugsweise direkt für den Scanwinkel und allgemein stellvertretend für eine Raumdimension. So wäre denkbar, die Scans in kartesische Koordinaten umzurechnen und in den Bildern zu der Zeitachse eine andere Raumachse zugrunde zu legen, insbesondere auch den Abstand.

Anstelle von 2D-LiDAR-Daten können auch 3D-LiDAR-Daten verarbeitet werden. In diesem Fall werden 3D-Bilder verarbeitet, mit zwei Achsen entsprechend den beiden Winkeln in der ursprünglichen Scanrichtung und in Elevation, oder nach Umrechnung in entsprechenden kartesischen Koordinaten. In den dann präziser Voxel zu nennenden Pixeln sind weiterhin der Abstand und gegebenenfalls die Intensität codiert.

Zusätzlich zu den Messgrößen Abstand und Intensität können, sofern der Sensor das zur Verfügung stellt, weitere Größen wie Messwertgüte oder Fremdlichtpegel ausgewertet werden, oder die oben erwähnten mehreren Abstände eines mehrechofähigen Systems. Dazu werden weitere Bilder 46 mit diesen Größen beziehungsweise zusätzliche Kanäle in einem Mehrkanalbild erzeugt. Das Training und die Klassifikation laufen dann analog ab. Denkbar sind auch noch Daten anderer Quelle, etwa eines Radars oder einer Kamera nach entsprechender zeitlicher und räumlicher Registrierung.

## Patentansprüche

1. Optoelektronischer Sensor (10), insbesondere Laserscanner, zur Erfassung von Abstandsmessdaten von Objekten in einem Überwachungsbereich (20), der eine Messeinheit mit einem Lichtsender (12) zum Aussenden von Sendelicht (16) in den Überwachungsbereich (20) in mehrere Winkel und einen Lichtempfänger (26) zum Erzeugen eines Empfangssignals aus Empfangslicht (22), das aus mehreren Winkeln aus dem Überwachungsbereich (20) auftrifft, sowie eine Steuer- und Auswertungseinheit (36) aufweist, die dafür ausgebildet ist, aus dem Empfangssignal über die mehreren Winkel sowie Messwiederholungen durch Bestimmen einer Lichtlaufzeit die Abstandsmessdaten mit einer Winkel- und Zeitauflösung zu erfassen,
**dadurch gekennzeichnet,**
**dass** die Steuer- und Auswertungseinheit (36) weiterhin dafür ausgebildet ist, die Abstandsmessdaten zu einem Bild (46) anzuordnen, in dem Pixel mit Abstandswerten über eine Dimension eines Winkels und eine Dimension der Zeit angeordnet sind, und das Bild (46) mit einem Bildklassifikationsverfahren (48) des maschinellen Lernens auszuwerten, um den Pixeln jeweils eine Klasse zuzuweisen.

2. Sensor (10) nach Anspruch 1,
wobei das Bildklassifikationsverfahren (48) ein Objekt von einer Störung durch Umwelteinflüsse unterscheidet, insbesondere durch Staub, Gischt, Nebel, Regen oder Schnee.

3. Sensor (10) nach Anspruch 2,
wobei die Steuer- und Auswertungseinheit (36) dafür ausgebildet ist, Abstandsmessdaten zu Pixeln zu verwerfen, die als Störung klassifiziert sind.

4. Sensor (10) nach einem der vorhergehenden Ansprüche,
wobei die Steuer- und Auswertungseinheit (36) dafür ausgebildet ist, zu den Pixeln zusätzlich zu den Abstandswerten einen Intensitätswert zu bestimmen.

5. Sensor (10) nach einem der vorhergehenden Ansprüche,
wobei die Steuer- und Auswertungseinheit (36) dafür ausgebildet ist, zu den Pixeln mehrere Abstände zu bestimmen.

6. Sensor (10) nach einem der vorhergehenden Ansprüche,
wobei die Steuer- und Auswertungseinheit (36) dafür ausgebildet ist, für das Anordnen zu einem Bild (46) Abstandsmessdaten für Pixel zu interpolieren, um auch zu Winkeln und/oder Zeiten Abstandswerte anzugeben, für die ursprünglich nicht gemessen wurde.

7. Sensor (10) nach einem der vorhergehenden Ansprüche,
wobei die Steuer- und Auswertungseinheit (36) dafür ausgebildet ist, aus dem Bild (46) Abstandsmessdaten zu den Winkeln und/oder Zeiten rückzurechnen, in denen eine Lichtlaufzeit bestimmt wurde, und den Abstandsmessdaten eine jeweilige Klasse aus dem Pixel oder den Pixeln zuzuweisen, die in Nachbarschaft des jeweiligen Winkels und/oder der jeweiligen Zeit liegen.

8. Sensor (10) nach einem der vorhergehenden Ansprüche,
wobei das Bildklassifikationsverfahren (48) nur Pixeln zu einer festen Zeit eine Klasse zuordnet.

9. Sensor (10) nach einem der vorhergehenden Ansprüche,
wobei das Bildklassifikationsverfahren (48) ein tiefes neuronales Netz aufweist.

10. Sensor (10) nach einem der vorhergehenden Ansprüche,
wobei das Bildklassifikationsverfahren (48) vorab mit Bildern (46) trainiert ist, zu deren Pixeln die Klasse bekannt ist.

11. Sensor (10) nach Anspruch 9,
wobei die bekannte Klasse durch gezielte Störung bestimmter Teilbereiche des Überwachungsbereichs (20) vorgegeben ist.

12. Sensor (10) nach einem der vorhergehenden Ansprüche,
wobei das Bildklassifikationsverfahren (48) auf kleine Fehler für eine bestimmte Klasse optimiert ist.

13. Sensor (10) nach einem der vorhergehenden Ansprüche,
der als 2D-Laserscanner ausgebildet ist, dessen Messeinheit insbesondere eine bewegliche Ablenkeinheit (18) zur periodischen Abtastung des Überwachungsbereichs (20) aufweist.

14. Verfahren zur Erfassung von Abstandsmessdaten von Objekten in einem Überwachungsbereich (20), bei dem Sendelicht (16) in den Überwachungsbereich (20) in mehrere Winkel ausgesandt und aus Empfangslicht (22), das aus mehreren Winkeln aus dem Überwachungsbereich (20) eintrifft, ein Empfangssignal erzeugt wird, wobei aus dem Empfangssignal über die mehreren Winkel sowie Messwiederholungen durch Bestimmen einer Lichtlaufzeit die Abstandsmessdaten mit einer Winkel- und Zeitauflösung erfasst werden,
**dadurch gekennzeichnet,**
**dass** die Abstandsmessdaten zu einem Bild (46) angeordnet werden, in dem Pixel mit Abstandswerten über eine Dimension eines Winkels und eine Dimension der Zeit angeordnet sind, und das Bild (46) mit einem Bildklassifikationsverfahren (48) des maschinellen Lernens ausgewertet wird, um den Pixeln jeweils eine Klasse zuzuweisen.

## Claims

1. An optoelectronic sensor (10), in particular a laser scanner, for detecting distance measurement data of objects in a monitoring area (20), comprising a measuring unit having a light transmitter (12) for transmitting transmitted light (16) into the monitoring area (20) at a plurality of angles and a light receiver (26) for generating a received signal from received light (22) that is incident from the monitoring area (20) from a plurality of angles, and a control and evaluation unit (36) configured to detect the distance measurement data with an angular and time resolution from the received signal over the plurality of angles and measurement repetitions by determining a light time of flight,
**characterized in that** the control and evaluation unit (36) is further configured to arrange the distance measurement data into an image (46) wherein pixels including distance values are arranged over one dimension of an angle and one dimension of time, and to evaluate the image (46) using a machine learning image classification method (48) to assign a respective class to the pixels.

2. The sensor (10) according to claim 1,
wherein the image classification method (48) distinguishes an object from disturbance by environmental influences, in particular by dust, spray, fog, rain or snow.

3. The sensor (10) according to claim 2,
wherein the control and evaluation unit (36) is configured to discard distance measurement data to pixels classified as a disturbance.

4. The sensor (10) according to any of the preceding claims,
wherein the control and evaluation unit (36) is configured to determine an intensity value for the pixels in addition to the distance values.

5. The sensor (10) according to any of the preceding claims,
wherein the control and evaluation unit (36) is configured to determine a plurality of distances to the pixels.

6. The sensor (10) according to any of the preceding claims,
wherein the control and evaluation unit (36) is configured to interpolate distance measurement data for pixels for the arranging into an image (46) in order to also provide distance values for angles and/or times for which measurements were not originally made.

7. The sensor (10) according to any of the preceding claims,
wherein the control and evaluation unit (36) is configured to calculate, from the image (46), distance measurement data at the angles and/or times where a light time of flight has been determined, and to assign to the distance measurement data a respective class from the pixel or pixels lying in the neighborhood of the respective angle and/or time.

8. The sensor (10) according to any of the preceding claims,
wherein the image classification method (48) assigns a class only to pixels at a fixed time.

9. The sensor (10) according to any of the preceding claims,
wherein the image classification method (48) comprises a deep neural network.

10. The sensor (10) according to any of the preceding claims,
wherein the image classification method (48) is trained in advance with images (46) for whose pixels the class is known.

11. The sensor (10) according to claim 9,
wherein the known class is predetermined by selectively disturbing certain portions of the monitoring area (20).

12. The sensor (10) according to any of the preceding claims,
wherein the image classification method (48) is optimized for small errors for a particular class.

13. The sensor (10) according to any of the preceding claims,
that is configured as a 2D laser scanner whose measuring unit in particular comprises a movable deflection unit (18) for periodically scanning the monitoring area (20).

14. A method for detecting distance measurement data of objects in a monitoring area (20), wherein transmitted light (16) is transmitted into the monitoring area (20) at a plurality of angles and a received signal is generated from received light (22) that is incident from a plurality of angles from the monitoring area (20), wherein the distance measurement data having an angular and time resolution is detected from the received signal over the plurality of angles and measurement repetitions by determining a light time of flight,
**characterized in that** the distance measurement data is arranged into an image (46) wherein pixels including distance values are arranged over one dimension of an angle and one dimension of time, and the image (46) is evaluated using a machine learning image classification method (48) to assign a respective class to the pixels.

## Revendications

1. Capteur optoélectronique (10), en particulier scanner laser, pour saisir des données de mesure de distance d'objets dans une zone à surveiller (20), comprenant une unité de mesure ayant un émetteur de lumière (12) pour émettre de la lumière d'émission (16) dans la zone à surveiller (20) dans plusieurs angles, et un récepteur de lumière (26) pour générer un signal de réception à partir de la lumière de réception (22), qui arrive de la zone à surveiller (20) depuis plusieurs angles, ainsi qu'une unité de commande et d'évaluation (36) qui est réalisée pour saisir les données de mesure de distance avec une résolution angulaire et temporelle à partir du signal de réception sur lesdits plusieurs angles ainsi que des répétitions de mesure en déterminant un temps de vol de la lumière,
**caractérisé en ce que**
l'unité de commande et d'évaluation (36) est en outre réalisée pour disposer les données de mesure de distance en une image (46) dans laquelle sont disposés des pixels avec des valeurs de distance sur une dimension d'un angle et une dimension du temps, et pour évaluer l'image (46) par un procédé de classification d'image (48) de l'apprentissage automatique afin d'attribuer une classe respective aux pixels.

2. Capteur (10) selon la revendication 1,
dans lequel le procédé de classification d'image (48) distingue un objet d'une perturbation par des influences environnementales, en particulier par des poussières, des embruns, du brouillard, de la pluie ou de la neige.

3. Capteur (10) selon la revendication 2,
dans lequel l'unité de commande et d'évaluation (36) est réalisée pour rejeter les données de mesure de distance relatives aux pixels qui sont classés comme perturbation.

4. Capteur (10) selon l'une des revendications précédentes,
dans lequel l'unité de commande et d'évaluation (36) est réalisée pour déterminer, en plus des valeurs de distance, une valeur d'intensité relative aux pixels.

5. Capteur (10) selon l'une des revendications précédentes,
dans lequel l'unité de commande et d'évaluation (36) est réalisée pour déterminer plusieurs distances relatives aux pixels.

6. Capteur (10) selon l'une des revendications précédentes,
dans lequel, pour la disposition en une image (46), l'unité de commande et d'évaluation (36) est réalisée pour interpoler des données de mesure de distance pour des pixels, afin d'indiquer également des valeurs de distance pour des angles et/ou des temps pour lesquels aucune mesure n'a été effectuée initialement.

7. Capteur (10) selon l'une des revendications précédentes,
dans lequel l'unité de commande et d'évaluation (36) est réalisée pour recalculer, à partir de l'image (46), des données de mesure de distance relatives aux angles et/ou aux temps auxquels un temps de vol de lumière a été déterminé, et pour attribuer aux données de mesure de distance une classe respective à partir du pixel ou des pixels qui se trouvent au voisinage de l'angle et/ou du temps respectif.

8. Capteur (10) selon l'une des revendications précédentes,
dans lequel le procédé de classification d'image (48) attribue une classe uniquement aux pixels à un moment fixe.

9. Capteur (10) selon l'une des revendications précédentes,
dans lequel le procédé de classification d'image (48) comprend un réseau neuronal profond.

10. Capteur (10) selon l'une des revendications précédentes,
dans lequel le procédé de classification d'image (48) est préalablement entraîné avec des images (46) dont la classe des pixels est connue.

11. Capteur (10) selon la revendication 9,
dans lequel la classe connue est prédéfinie par une perturbation ciblée de certaines zones partielles de la zone à surveiller (20).

12. Capteur (10) selon l'une des revendications précédentes,
dans lequel le procédé de classification d'image (48) est optimisé pour de petites erreurs pour une classe donnée.

13. Capteur (10) selon l'une des revendications précédentes,
qui est réalisé comme un scanner laser 2D dont l'unité de mesure comporte en particulier une unité de déviation mobile (18) pour balayer périodiquement la zone à surveiller (20).

14. Procédé de saisie de données de mesure de distance d'objets dans une zone à surveiller (20), dans lequel une lumière d'émission (16) est émise dans la zone à surveiller (20) dans plusieurs angles, et un signal de réception est généré à partir de la lumière de réception (22) qui arrive de la zone à surveiller (20) depuis plusieurs angles, dans lequel les données de mesure de distance sont saisies avec une résolution angulaire et temporelle à partir du signal de réception sur lesdits plusieurs angles ainsi que des répétitions de mesure en déterminant un temps de vol de la lumière, **caractérisé en ce que**
les données de mesure de distance sont disposées en une image (46) dans laquelle sont disposés des pixels avec des valeurs de distance sur une dimension d'un angle et une dimension du temps, et l'image (46) est évaluée par un procédé de classification d'image (48) de l'apprentissage automatique afin d'attribuer une classe respective aux pixels.
